# EUROPEAN PATENT SPECIFICATION

(11) **EP 2 345 895 B1**
(45) Date of publication and mention of the grant of the patent: **09.09.2020**
(21) Application number: 09819129.9
(22) Date of filing: 02.10.2009
(51) Int. Cl.: G01N 30/26, G01F 23/292, G01N 30/20

(54) **ANALYZING DEVICE FOR LIQUID CHROMATOGRAPHY COMPRISING A MOBILE PHASE FEEDER AND A STORAGE CONTAINER FOR MOBILE PHASE**
ANALYSEGERÄT FÜR FLÜSSIGCHROMATOGRAPHIE MIT EINEM SPENDER FÜR MOBILE PHASE UND MIT EINEM SPEICHERBEHÄLTER FÜR MOBILE PHASE
DISPOSITIF D'ANALYSE POUR CHROMATOGRAPHIE LIQUIDE AVEC UN DISPENSATEUR DE PHASE MOBILE ET AVEC UN RÉSERVOIR POUR PHASE MOBILE

(30) Priority: 06.10.2008 JP 2008259456
(43) Date of publication of application: 20.07.2011
(73) Proprietor: ARKRAY, Inc., Minami-ku Kyoto-shi Kyoto 601-8045 (JP)
(72) Inventor: AONO, Takafumi, Kyoto-shi Kyoto 6018045 (JP); TAKAGI Takeshi, Kyoto-shi Kyoto 601-8045 (JP)
(74) Representative: Dehns
(86) International application number: PCT/JP2009/067218
(87) International publication number: WO 2010/041594

(56) References cited:
- EP-A2- 0 275 933
- EP-A2- 0 346 565
- JP-A- 10 096 715
- JP-A- 62 027 661
- JP-A- 62 167 472
- JP-A- 63 165 720
- JP-A- 2006 234 430
- JP-U- 63 029 759
- US-A- 5 112 492

## Description

### TECHNICAL FIELD

The present invention relates to an analyzing device used as an analysis means in the field of biochemistry, medicine and the like.

### BACKGROUND ART

In recent years, liquid chromatography devices are often used for sample analysis in the field of organic chemistry, biochemistry, medicine or the like. An example of a liquid chromatography device is disclosed in e.g. Patent Document 1. Fig. 4 of the present application shows an example of the structure of a typical liquid chromatography device. The liquid chromatography device X shown in the figure includes a column 91, a detector 92, a liquid feed pump 93, an injection valve 94, a sample suction nozzle 95 and a suction unit 96. The liquid feed pump 93 is connected to a mobile phase container B containing a mobile phase such as an eluant. By actuating the liquid feed pump 93, the eluant is fed to the column 91 via the injection valve 94. The sample suction nozzle 95 is provided for drawing out the sample contained in a sample container C. The sample suction nozzle 95 is movable vertically or horizontally to successively draw out the sample contained in different sample containers C. The suction unit 96 is used to suck the sample into the injection valve 94.

To perform analysis using the liquid chromatography device X, the sample drawn into the injection valve 94 is first introduced into the column 91 for allowing the sample to be adsorbed to the filler in the column 91. Then, the eluant in the mobile phase container B is fed into the column 91 by using the liquid feed pump 93, whereby measurement by the detector 92 is performed. The sample adsorbed to the filler is desorbed by the eluant and separated into components in the column 91. The detector 92 detects each separated component by e.g. measuring the absorbance. The introduction of the sample into the injection valve 94, introduction of the sample into the column 91 or introduction of the eluant into the column are performed properly by appropriately changing the flow passage in the injection valve 94. Thereafter, the sample suction nozzle 95 is moved for attachment to a next sample container C different from the previous sample container C, and the sample contained in this sample container C is drawn into the injection valve 94. Repeating this operation allows successive analysis of samples from different sample containers C.

In this type of liquid chromatography device X for sample analysis, the mobile phase container B for containing an eluant is designed to have a relatively large volume to achieve successive analysis of a number of samples. When the eluant in the mobile phase container B is emptied out, gas enters the column 91, which hinders proper sample analysis and may further cause a failure of the device. To prevent such a problem, a liquid level detection sensor or the like is provided so that when the remaining amount of the eluant falls below a predetermined amount, the sensor detects it and the container is replaced with a new mobile phase container B full of eluant. The used mobile phase container B is disposed of.

In the above-described conventional structure, however, in replacing the mobile phase container B, the eluant remaining in the mobile phase container B is disposed of together with the container, being wasted. When the volume of the mobile phase container B is large, it follows that a large amount of unused eluant is disposed of, which is not desirable.

Patent Document 1: JP-A-H10-96715

### DISCLOSURE OF THE INVENTION

### Problems to be Solved by the Invention

It is an object of the present invention to provide an analyzing device that allows a liquid for use in analysis to be used completely without being wasted. The present invention is disclosed in claim 1 and the claims dependent thereon.

US 511492 A discloses an analyzing device comprising: a feeder for feeding a liquid for use in analysis from a container containing the liquid; a storage chamber for temporarily storing the liquid from the container, the storage chamber being provided between the container and an injection valve; and a liquid level detector for detecting a level of the liquid in the storage chamber, wherein the feeder comprises a liquid feed pump for feeding the liquid in the container to the injection valve via the storage chamber.

### Means for Solving the Problem

The present invention is characterised in that the feeder comprises a gas transfer pump connected to an upper portion of the storage chamber for discharging gas in the storage chamber to outside to reduce pressure in the storage chamber to allow the liquid in the container to be introduced into the storage chamber via a liquid introduction pipe, wherein the liquid introduction pipe has an end that opens in an upper portion of the storage chamber, and in that the liquid feed pump is provided between the storage chamber and the injection valve.

In a preferred embodiment of the present invention, the analyzing device further comprises a controller that actuates the gas transfer pump when the position of the liquid level detected by the liquid level detector is lower than a predetermined height and stops actuating the gas transfer pump when the position of the liquid level exceeds the predetermined height.

In a preferred embodiment of the present invention, the container or the storage chamber is provided with a check valve that allows outside air to enter when the inside of the storage chamber reaches a predetermined negative pressure.

In a preferred embodiment of the present invention, the storage chamber is provided with a discharge pipe for discharging the liquid mobile phase in the storage chamber toward the injection valve. The discharge pipe includes an end that opens sideways within the storage chamber.

Other features and advantages of the present invention will become more apparent from the detailed description given below with reference to the accompanying drawings.

### BRIEF DESCRIPTION OF THE DRAWINGS

Fig. 1 is a schematic structural view of a liquid chromatography device as an embodiment of an analyzing device according to the present invention;
Fig. 2 is a schematic structural view showing the state of feeding a sample into a column of the liquid chromatography device of Fig. 1;
Fig. 3 is a longitudinal sectional view of the schematic structure of a storage chamber; and

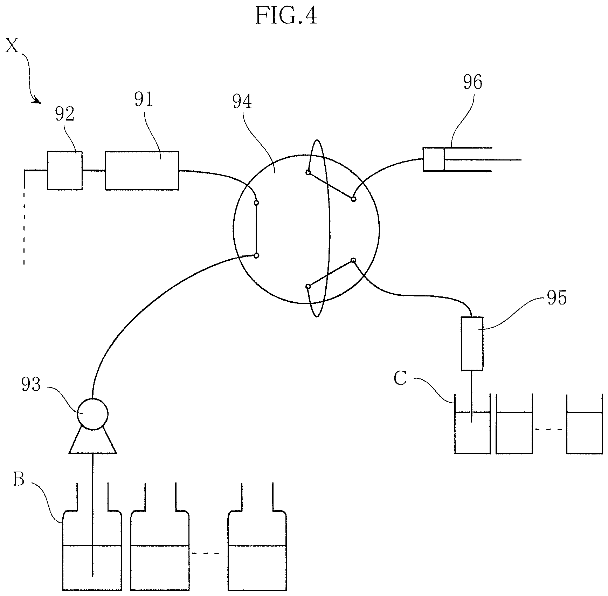

Fig. 4 is a schematic structural view of an example of conventional liquid chromatography device.

### BEST MODE FOR CARRYING OUT THE INVENTION

Preferred embodiments of the present invention are described below with reference to the accompanying drawings.

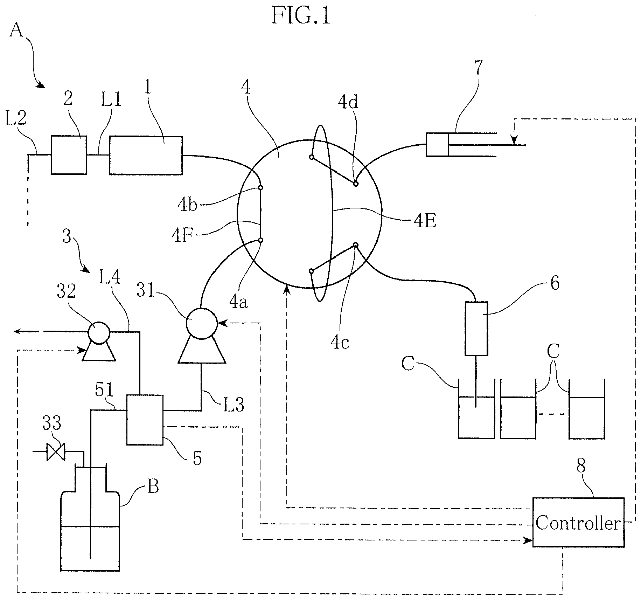

Fig. 1 is a schematic structural view of an analyzing device according to the present invention exemplarily structured as a liquid chromatography device. The liquid chromatography device A separates a sample supplied from a sample container C into components for analysis, by using an eluant as a mobile phase supplied from a mobile phase container B. The liquid chromatography device includes a column 1, a detector 2, a mobile phase feeder 3, an injection valve 4, a storage chamber 5, a sample suction nozzle 6, a suction unit 7, piping connecting these parts, and a controller 8.

The column 1 contains filler for adsorbing a sample introduced in the column and serves to control the adsorption/desorption of biological components relative to the filler and supply different kinds of biological components to the detector 2. When the eluant is introduced into the column 1 after the sample is adsorbed to the filler, the adsorbed sample is desorbed by the eluant. The desorbed sample and the eluant are discharged from the column 1 as an effluent and introduced into the detector 2 through a pipe L1.

The detector 2 measures the absorbance of the effluent from the column 1 to analyze the components of the sample. After passing through the detector 2, the effluent is discharged through a pipe L2 and collected in e.g. a liquid waste tank, not shown.

The mobile phase feeder 3 is provided for feeding the eluant in the mobile phase container B to the column 1 via the storage chamber 5 and the injection valve 4, and includes a liquid feed pump 31 and a gas transfer pump 32. The liquid feed pump 31 applies power for moving the eluant in the mobile phase container B to the injection valve 4 via the storage chamber 5. The liquid feed pump is provided at the pipe L3 connecting the storage chamber 5 and the injection valve 4. When the liquid feed pump 31 is actuated, the eluant in the storage chamber 5 is fed to the injection valve 4. The liquid feed pump 31 is also used for feeding the sample in the injection valve 4 to the column 1.

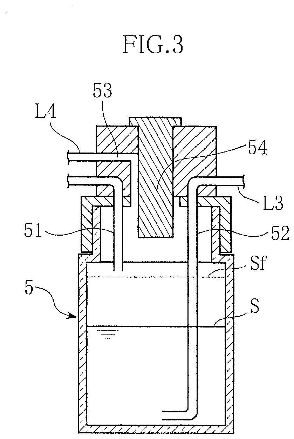

The gas transfer pump 32 discharges the gas in the storage chamber 5 to the outside to allow the eluant in the mobile phase container B to move into the storage chamber 5. The gas transfer pump is provided at a pipe L4. The pipe L4 has an end that is open to the outside and another end connected to an exhaust passage 53 of the storage chamber 5 (see Fig. 3), which will be described later.

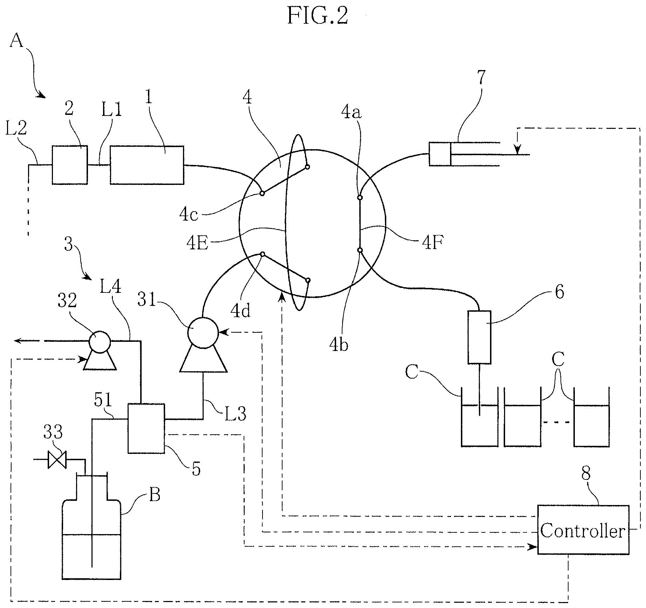

The injection valve 4 serves to introduce a predetermined amount of sample, fed to the injection valve, into the column 1 and also introduce the eluant from the storage chamber 5 into the column 1. The injection valve 74 comprises e.g. a six-way valve and includes ports 4a, 4b, 4c and 4d. The ports 4c and 4d are connected by a loop-like passage 4E that is capable of retaining a predetermined amount (e.g. 14µm) of sample necessary for measurement. The injection valve 4 is designed to be able to change the connection target of the ports 4a, 4b, 4c and 4d. To feed the sample retained in the passage 4E to the column 1, as shown in Fig. 2, the port 4d is connected to the liquid feed pump 31, whereas the port 4c is connected to the column 1. When the liquid feed pump 31 is actuated in this state, the sample between the ports 4c and 4d is fed to the column 1. To feed the eluant to the column 1, the port 4a is connected to the liquid feed pump 31, whereas the port 4b is connected to the column 1. When the liquid feed pump 31 is actuated in this state, the eluant flows into the column 1 through the passage 4F between the ports 4a and 4b.

The storage chamber 5 is provided for temporarily storing the eluant fed from the mobile phase container B. The storage chamber comprises e.g. a hermetically closed container made of a chemical-resistant material such as glass or synthetic resin. The storage chamber 5 is provided with an eluant introduction pipe 51, an eluant discharge pipe 52, an exhaust passage 53 and a liquid level detection sensor 54. In this embodiment, while the volume of the mobile phase container B is about 1 L and the amount of the eluant used for a single time of analysis is about 2 mL, the volume of the storage chamber 5 is about 30 mL.

The eluant introduction pipe 51 is a pipe for introducing the eluant from the mobile phase container B into the storage chamber 5 and has an end that opens downward in an upper portion in the storage chamber 5. The eluant discharge pipe 52 is a pipe for discharging the eluant in the storage chamber 5 toward the injection valve 4, and is connected to the pipe L3 in an upper portion of the storage chamber 5. The eluant discharge pipe 52 includes a bent portion adjacent to the lower end, and the bent portion includes an end that opens sideways near the bottom of the storage chamber 5. The exhaust passage 53 is a passage for discharging the gas in the storage chamber 5 to the outside, and is connected to the pipe L4 at an upper portion of the storage chamber 5.

The liquid level detection sensor 54 comprises e.g. an optical sensor such as a photosensor and detects the position of the liquid level S of the eluant in the storage chamber 5. In this embodiment, when the liquid level S reaches a full liquid level position Sf, which is a position reached when the chamber is full of liquid, the liquid level detection sensor 54 outputs a full liquid detection signal. The liquid level detection sensor 54 is not limited to a sensor that outputs what is called ON/OFF signals to indicate whether or not the position of the liquid level S is higher than a predetermined level, but may be e.g. a sensor that is capable of continuously detecting the position of the liquid level S relative to the liquid level detection sensor 54.

The mobile phase container B may comprise an aluminum package of a non-fixed shape or a plastic container of a fixed shape. In this embodiment, an aluminum package is suitably employed. An eluant is loaded in the mobile phase container B. The mobile phase container B is provided with a check valve 33 for allowing outside air to enter when the internal pressure reaches a predetermined negative pressure.

The sample suction nozzle 6 is provided for drawing the sample contained in the sample container C. In the sample container C, a sample such as blood of a human body is contained. The sample suction nozzle 6 is movable vertically or horizontally to successively draw the sample in different sample containers C.

The suction unit 7 is used to suck the sample into the injection valve 4.

The controller 8 controls the operation of each part of the liquid chromatography device A. The process of introducing the sample and the eluant into the column 1 under control by the controller 8 is described below. First, as shown in Fig. 1, the controller 8 causes the suction unit 7 to draw the sample from a first sample container C into the passage 4E of the injection valve 4 via the sample suction nozzle 6. By this operation, a predetermined amount of sample is introduced into the passage 4E.

Then, as shown in Fig. 2, the controller 8 rotates the injection valve 4 so that the port 4c is connected to the column 1 and the port 4d is connected to the liquid feed pump 31. Then, the controller 8 controls the liquid feed pump 31 so that the sample in the passage 4E between the ports 4c and 4d is fed into the column 1. Thus, the sample is introduced into the column 1 and adsorbed to the filler. Then, the controller 8 rotates the injection valve 4 so that the port 4a is connected to the liquid feed pump 31 and the port 4b is connected to the column 1. The controller 8 then controls the liquid feed pump 31 so that the eluant is fed from the storage chamber 5 into the column 1. The eluant fed into the column 1 desorbs the sample from the filler, whereby an effluent is produced. The effluent is subjected to measurement by the detector 2, whereby the result of the first time of analysis is obtained.

Then, the controller 8 moves the sample suction nozzle 6 to attach the sample suction nozzle 6 to a second sample container C. Thereafter, the liquid feed pump 31 and the injection valve 4 are controlled in the same manner as in the first time of analysis, whereby the result of the second time of analysis is obtained. By repeating the same control, the third and the subsequent analysis are successively performed.

The controller 8 also controls the operation of the gas transfer pump 32 to introduce the eluant in the mobile phase container B into the storage chamber 5. Specifically, the controller 8 performs control based on the information on the position of the liquid level S of the eluant in the storage chamber 5 detected by the liquid level detection sensor 54. When the gas transfer pump 32 is actuated, the gas in the storage chamber 5 is discharged to the outside via the exhaust passage 53 and the pipe L4, whereby the pressure in the storage chamber 5 drops. Thus, the eluant in the mobile phase container B is introduced into the storage chamber 5 via the eluant introduction pipe 51.

Herein, the controller 8 actuates the gas transfer pump 32 when the position of the liquid level S detected by the liquid level detection sensor 54 is lower than the predetermined height, i.e., the full liquid level position Sf. When the liquid level S reaches the full liquid level position Sf, the controller 8 stops actuating the gas transfer pump 32 in accordance with the full liquid detection signal from the liquid level detection sensor 54. These operations keep the amount of the eluant in the storage chamber 5 substantially constant.

The advantages of the liquid chromatography device A are described below.

In the liquid chromatography device A having the above-described structure, the storage chamber 5 is provided between the mobile phase container B and the injection valve 4. As the sample analysis proceeds, the eluant in the storage chamber 5 is consumed, and the eluant in the mobile phase container B is consumed accordingly. By successively performing analysis with respect to a number of samples, the eluant in the mobile phase container B is eventually emptied. At this point, however, the eluant still remains in the storage chamber 5. The remaining amount of the eluant in the storage chamber 5 is detected by the liquid level detection sensor 54. Thus, the mobile phase container B can be replaced with a new one when the remaining amount of eluant in the storage chamber 5 falls below a predetermined amount. This allows the mobile phase container B to be replaced after the eluant in the container is completely used, so that the eluant for the analysis is not wasted by the replacement. Moreover, the above-described structure allows a predetermined amount of eluant to constantly remain in the storage chamber 5. Thus, the sample analysis can be continued even during the replacement of the mobile phase container B, which is advantageous in terms of efficiency of the analysis work.

In the present embodiment, apart from the liquid feed pump 31 for feeding the eluant from the storage chamber 5, the gas transfer pump 32 for introducing the eluant in the mobile phase container B into the storage chamber 5 is provided. By actuating the gas transfer pump 32, the eluant in the mobile phase container B is efficiently and properly introduced into the storage chamber 5.

When the eluant in the storage chamber 5 is sent out by the actuation of the liquid feed pump 31, the controller 8 properly controls the gas transfer pump 32 to keep the amount of the eluant in the storage chamber 5 substantially constant. This contributes to stable supply of the eluant to the column 1.

Moreover, in the present embodiment, the mobile phase container B is provided with the check valve 33 that allows outside air to enter when the inside of the storage chamber 5 reaches a predetermined negative pressure. This prevents excessive negative pressure from being applied to the storage chamber 5 or the mobile phase container B when the eluant in the mobile phase container B is emptied. Thus, the eluant in the storage chamber 5 is smoothly supplied toward the injection valve 4. Thus, the eluant in the storage chamber 5 can be used almost completely without interruption. Moreover, by preventing generation of excessive negative pressure, it is possible to avoidproblems such as the application of undesirable load on the connecting portion of a cap or the like in e.g. replacing the mobile phase container B. Further, the application of overload on the liquid feed pump 31 or the parts such as a solenoid valve arranged in the piping is also prevented.

In the present embodiment, the eluant discharge pipe 52 for discharging the eluant toward the injection valve 4 has an end that opens sideways . Thus, even when the dissolved gas in the eluant is turned into bubbles and diffused at the inner surface (bottom surface or side surface) of the storage chamber 5, the bubbles do not easily enter the eluant discharge pipe 52, which allows proper sample analysis. The specific structure of each part of the analyzing device according to the present invention may be varied in many ways within the scope defined by the claims.

## Claims

1. An analyzing device, wherein the analyzing device is a liquid chromatography device, comprising:
a column (1) containing a filler;
a feeder (3) for feeding a mobile phase liquid for use in analysis from a container (B) containing said liquid to the column (1) via an injection valve (4), wherein the injection valve (4) is capable of introducing a sample into the column (1) and is also capable of introducing said liquid mobile phase into the column (1); a storage chamber (5) for temporarily storing the liquid from the container (B), the storage chamber (5) being hermetically closed and being provided between the container (B) and the injection valve (4) ; and
a liquid level detector (54) for detecting a level of the liquid in the storage chamber (5),
wherein the feeder (3) comprises a liquid feed pump (31) for feeding the liquid in the storage chamber (5) to the injection valve (4) and from the injection valve (4) to the column (1), and wherein the liquid feed pump (31) is provided between the storage chamber (5) and the injection valve (4), **characterized**
**in that** the feeder (3) comprises a gas transfer pump (32) connected to an upper portion of the storage chamber (5) for discharging gas in the storage chamber (5) to outside to reduce pressure in the storage chamber (5) to allow the liquid in the container (B) to be introduced into the storage chamber (5) via a liquid introduction pipe (51), wherein the liquid introduction pipe (51) has an end that opens in an upper portion of the storage chamber (5).

2. The analyzing device according to claim 1, further comprising a controller (8) that actuates the gas transfer pump (32) when the position of the liquid level detected by the liquid level detector (54) is lower than a predetermined height and stops actuating the gas transfer pump (32) when the position of the liquid level exceeds the predetermined height.

3. The analyzing device according to claim 1, wherein the container (B) or the storage chamber (5) is provided with a check valve (33) that allows outside air to enter when the inside of the storage chamber (5) reaches a predetermined negative pressure.

4. The analyzing device according to claim 1, wherein the storage chamber (5) is provided with a discharge pipe for discharging the liquid mobile phase in the storage chamber (5) toward the injection valve (4), the discharge pipe including an end that opens sideways within the storage chamber (5).

## Patentansprüche

1. Analysevorrichtung, wobei die Analysevorrichtung eine Flüssigkeitschromatographievorrichtung ist, umfassend:
eine Säule (1), die einen Füllstoff enthält;
eine Zuführeinrichtung (3) zum Zuführen einer Flüssigkeit einer mobilen Phase zur Verwendung bei der Analyse aus einem Behälter (B), der die Flüssigkeit enthält, über ein Einspritzventil (4) zu der Säule (1), wobei das Einspritzventil (4) in der Lage ist, eine Probe in die Säule (1) einzuführen, und auch in der Lage ist, die flüssige mobile Phase in die Säule (1) einzuführen;
eine Speicherkammer (5) zum Zwischenspeichern der Flüssigkeit aus dem Behälter (B), wobei die Speicherkammer (5) hermetisch verschlossen ist und zwischen dem Behälter (B) und dem Einspritzventil (4) bereitgestellt ist; und
einen Flüssigkeitspegeldetektor (54) zum Detektieren eines Pegels der Flüssigkeit in der Speicherkammer (5),
wobei die Zuführeinrichtung (3) eine Flüssigkeitszuführpumpe (31) zum Zuführen der Flüssigkeit in der Speicherkammer (5) zu dem Einspritzventil (4) und von dem Einspritzventil (4) zu der Säule (1) umfasst,
und wobei die Flüssigkeitszuführpumpe (31) zwischen der Speicherkammer (5) und dem Einspritzventil (4) bereitgestellt ist, **dadurch gekennzeichnet, dass** die Zuführeinrichtung (3) eine Gasförderpumpe (32) umfasst, die mit einem oberen Abschnitt der Speicherkammer (5) verbunden ist, um Gas in der Speicherkammer (5) nach außen abzulassen, um den Druck in der Speicherkammer (5) zu reduzieren, um der Flüssigkeit in dem Behälter (B) zu ermöglichen, über ein Flüssigkeitseinführrohr (51) in die Speicherkammer (5) eingeführt zu werden, wobei das Flüssigkeitseinführrohr (51) ein Ende aufweist, das sich in einem oberen Abschnitt der Speicherkammer (5) öffnet.

2. Analysevorrichtung nach Anspruch 1, weiter umfassend eine Steuerung (8), die die Gasförderpumpe (32) betätigt, wenn die Position des von dem Flüssigkeitspegeldetektor (54) detektierten Flüssigkeitspegels niedriger als eine vorbestimmte Höhe ist, und die Betätigung der Gasförderpumpe (32) stoppt, wenn die Position des Flüssigkeitspegels die vorbestimmte Höhe überschreitet.

3. Analysevorrichtung nach Anspruch 1, wobei der Behälter (B) oder die Speicherkammer (5) mit einem Rückschlagventil (33) bereitgestellt ist, das den Eintritt von Außenluft ermöglicht, wenn das Innere der Speicherkammer (5) einen vorbestimmten Unterdruck erreicht.

4. Analysevorrichtung nach Anspruch 1, wobei die Speicherkammer (5) mit einem Ablassrohr zum Ablassen der flüssigen mobilen Phase in der Speicherkammer (5) in Richtung des Einspritzventils (4) bereitgestellt ist, wobei das Ablassrohr ein Ende beinhaltet, das sich seitlich innerhalb der Speicherkammer (5) öffnet.

## Revendications

1. Dispositif d'analyse, dans lequel le dispositif d'analyse est un dispositif de chromatographie en phase liquide, comprenant :
une colonne (1) contenant une charge ;
un dispositif d'alimentation (3) pour introduire un liquide de phase mobile à des fins d'utilisation dans une analyse à partir d'un récipient (B) contenant ledit liquide dans la colonne (1) via une vanne d'injection (4), dans lequel la vanne d'injection (4) est capable d'introduire un échantillon dans la colonne (1) et est également capable d'introduire ladite phase mobile liquide dans la colonne (1) ;
une chambre de stockage (5) pour stocker temporairement le liquide provenant du récipient (B), la chambre de stockage (5) étant hermétiquement fermée et étant fournie entre le récipient (B) et la vanne d'injection (4) ; et
un détecteur de niveau de liquide (54) pour détecter un niveau du liquide dans la chambre de stockage (5),
dans lequel le dispositif d'alimentation (3) comprend une pompe d'alimentation en liquide (31) pour introduire le liquide se trouvant dans la chambre de stockage (5) dans la vanne d'injection (4) et à partir de la vanne d'injection (4) dans la colonne (1),
et dans lequel la pompe d'alimentation en liquide (31) est fournie entre la chambre de stockage (5) et la vanne d'injection (4),
**caractérisé en ce que** le dispositif d'alimentation (3) comprend une pompe de transfert de gaz (32) connectée à une partie supérieure de la chambre de stockage (5) pour évacuer un gaz dans la chambre de stockage (5) vers l'extérieur pour réduire la pression dans la chambre de stockage (5) afin de permettre au liquide dans le récipient (B) d'être introduit dans la chambre de stockage (5) via un tuyau d'introduction de liquide (51), dans lequel le tuyau d'introduction de liquide (51) présente une extrémité qui s'ouvre dans une partie supérieure de la chambre de stockage (5).

2. Dispositif d'analyse selon la revendication 1, comprenant en outre un dispositif de commande (8) qui actionne la pompe de transfert de gaz (32) quand la position du niveau de liquide détecté par le détecteur de niveau de liquide (54) est inférieure à une hauteur prédéterminée et arrête d'actionner la pompe de transfert de gaz (32) quand la position du niveau de liquide dépasse la hauteur prédéterminée.

3. Dispositif d'analyse selon la revendication 1, dans lequel le récipient (B) ou la chambre de stockage (5) est pourvu d'un clapet anti-retour (33) qui permet à l'air extérieur d'entrer quand l'intérieur de la chambre de stockage (5) atteint une pression négative prédéterminée.

4. Dispositif d'analyse selon la revendication 1, dans lequel la chambre de stockage (5) est pourvue d'un tuyau d'évacuation pour évacuer la phase mobile liquide dans la chambre de stockage (5) vers la vanne d'injection (4), le tuyau d'évacuation incluant une extrémité qui s'ouvre latéralement à l'intérieur de la chambre de stockage (5)
